# EUROPÄISCHE PATENTSCHRIFT

(11) **EP 4 041 632 B1**
(45) Veröffentlichungstag und Bekanntmachung des Hinweises auf die Patenterteilung: **24.05.2023**
(21) Anmeldenummer: 20789560.8
(22) Anmeldetag: 07.10.2020
(51) Int. Cl.: B64D 11/06

(54) **FLUGGASTSITZ MIT EINEM GESTELL SOWIE SITZREIHE**
AIR PASSENGER SEAT COMPRISING A FRAME, AND ROW OF SEATS
SIÈGE DE PASSAGER D'UN AVION COMPRENANT UN CADRE ET UNE RANGÉE DE SIÈGES

(30) Priorität: 08.10.2019 DE 102019127049
(43) Veröffentlichungstag der Anmeldung: 17.08.2022
(73) Patentinhaber: ZIM Aircraft Seating GmbH, 88090 Immenstaad am Bodensee (DE)
(72) Erfinder: ZIMMERMANN, Peter, 88677 Markdorf (DE)
(74) Vertreter: Otten, Roth, Dobler & Partner mbB Patentanwälte
(86) Internationale Anmeldenummer: PCT/EP2020/078151
(87) Internationale Veröffentlichungsnummer: WO 2021/069511

(56) Entgegenhaltungen:
- EP-A2- 1 308 344
- EP-A2- 1 600 376
- WO-A1-2019/074495
- WO-A1-2019/197329
- WO-A2-2009/135669
- DE-A1-102017 003 121
- DE-U1-202007 013 159
- GB-A- 811 898
- US-A1- 2015 284 087
- US-A1- 2020 317 349

## Beschreibung

### Stand der Technik

Zur Ausstattung von Passagierflugzeugen, insbesondere von Langstreckenflugzeugen sind Fluggastsitze mit einem oder mehreren Sitzplätzen in einer Vielzahl von Ausführungsformen bekannt. Ein Sitzplatz weist üblicherweise einen Sitzboden und eine Rückenlehne auf, wobei normalerweise zwei oder mehr Fluggastsitze zu einer Sitzreihe verbunden sind. Ein bekannter Fluggastsitz ist in der US 2015/0284087 A1, der EP 1 600 376 A2 und in der DE 20 2007 013 159 U1 gezeigt.

Bei der Ausgestaltung der Fluggastsitze wird versucht, dass sich für einen Fluggast ein möglichst großer Bewegungsraum, dem sogenannten "Living Space" insbesondere bei hintereinander angeordneten Fluggastsitzen ergibt. Hierzu werden beispielsweise Elemente in die Rückenlehne hinein verlagert.

### Aufgabe und Vorteile der Erfindung

Aufgabe der vorliegenden Erfindung ist es, einen verbesserten Fluggastsitz bereitzustellen, welcher insbesondere einen vergleichsweise größeren "Living Space" bietet.

Diese Aufgabe wird durch die Merkmale des Anspruchs 1 gelöst.

Bevorzugte und vorteilhafte Ausführungen der Erfindung sind in den abhängigen Ansprüchen aufgeführt.

Die Erfindung geht von einer Sitzreihe mit mindestens zwei Fluggastsitzen aus, wobei jeder Fluggastsitz ein Gestell aufweist, das zur Befestigung an einem Boden einer Fluggastkabine vorgesehen ist, wobei das Gestell einen Sitzteiler und quer zu Sitzrichtung verlaufende Holme umfasst, wobei die Sitzteiler der Gestelle durch die Holme gehalten sind und hinter einem ersten vorne liegenden Holm bezogen auf eine Sitzrichtung des Fluggastsitzes ein hinterer dahinterliegender zweiter Holm angeordnet ist.

Das Gestell weist vorzugsweise Stützbeine auf, die mit dem Sitzteiler verbunden sein können. Es können mehrere Sitzteiler angeordnet sein. Beispielsweise sind für einen Sitz zwei Sitzteiler vorgesehen.

Erfindungsgemäß weist jeder Fluggastsitz einen Sitzboden und eine Rückenlehne auf, wobei der Sitzboden über Führungsmittel an einer Führungsschiene verschiebbar gelagert ist. Des Weiteren kann das Gestell eine insbesondere feste Umhausung der Rückenlehne aufweisen. Die Umhausung ist beispielsweise als eine Rückenlehnenschale ausgebildet. Durch die Rückenlehnenschale kann eine Ausdehnung des Fluggastsitzes entgegen einer Sitzrichtung in einem rückwärtigen Bereich unveränderlich festgelegt werden.

Die Rückenlehne ist insbesondere im Bereich ihrer Oberkante vorteilhafterweise bewegbar am Gestell des Fluggastsitzes, z.B. an der Rückenlehnenschale gelagert. Erfindungsgemäß ist die Rückenlehne derart gelagert, dass die Rückenlehne eine Schwenk-Verschiebebewegung zusammen mit dem Sitzboden ausführen kann. Dabei nimmt die Rückenlehne insbesondere unterschiedliche Schwenkstellungen ein, z.B. von einer aufrechten Stellung in eine geneigte Stellung.

Der Kern der Erfindung liegt nun darin, dass senkrecht zu einer Ebene, die durch Befestigungspunkte des Gestells am Boden einer Fluggastkabine gebildet ist, bzw. senkrecht zu einem Kabinenboden, der insbesondere zur Ebene durch die Befestigungspunkte parallel verläuft, ein Höhenunterschied zwischen dem ersten und dem zweiten Holm derart vorhanden ist, dass der hintere, zweite Holm mindestens 20 mm höher angeordnet ist als der vordere, erste Holm. Erfindungsgemäß bezieht sich dieses Differenzmaß d auf eine zentrische Längsachse der Holme. Z.B. ist bei symmetrischen Holmen das Differenzmaß d vorzugsweise auf die Symmetrieachsen der Holme bezogen, also der Abstand von Symmetrieachse zu Symmetrieachse, die bei Rundrohren die Rotationsachse sein kann. Bei nicht achssymmetrischen Holmen wird das Differenzmaß z.B. auf eine Längsachse, insbesondere zentrische Längsachse bezogen, die z.B. durch einen Flächenschwerpunkt des Querschnitts des Holms läuft.

Vorzugsweise ist das Differenzmaß d mindestens 25, 30, 35, 40, 45, 50, 55, 60, 65, 70, 75, 80, 85, 90, 95 oder 100 mm.

Das Differenzmaß d liegt somit vorzugsweise zwischen 20 und 100 mm. In diesem Bereich kann noch eine technisch sinnvolle Sitzstruktur realisiert werden.

Die Holme laufen vorzugsweise parallel zueinander.

Durch die erfindungsgemäße Anordnung der Holme nämlich mit einem höherliegenden hinteren Holm, also einen Holm im Bereich der Rückseite des Sitzes, ergibt sich für einen Fluggast, der diese Rückseite in einer Sitzreihe dahinter vor sich hat, ein größerer Bewegungsraum für seine Beine bezogen auf den vor ihm positionierten Fluggastsitz, insbesondere im Bereich des hinteren Holmes dieses Fluggastsitzes.

Die Holme laufen vorzugsweise senkrecht zum Sitzteiler bzw. senkrecht zu mehreren Sitzteilern.

Bei bekannten Ausgestaltungen ist der hintere Holm normalerweise entweder auf gleicher Höhe mit dem vorderen Holm oder liegt sogar tiefer. Damit wird, durch die Positionierung des hinteren Holmes für den Sitz in diesem Bereich mehr Raum eingenommen, der einem dort sitzenden Fluggastsitz anders wie bei der erfindungsgemäßen Lösung nicht zur Verfügung steht.

In einer überdies bevorzugten Ausgestaltung der Erfindung weist der erste und zweite Holm unterschiedliche Querschnitte auf. Bei rotationssymmetrischen Holmen sind vorzugsweise die Durchmesser unterschiedlich. Hinsichtlich des Querschnitts wird vorzugsweise bei einem hohlen Holm die Fläche verstanden, die sich zusammensetzt aus dem Wandungsquerschnitt und dem Flächenbereich der von einer Wandung des Holms umschlossen wird.

Im Weiteren ist es vorteilhaft, wenn der erste Holm einen größeren Querschnitt als der zweite Holm aufweist. Insbesondere weist der erste Holm einen größeren Durchmesser als der zweite Holm auf.

Auf diese Weise kann der Platzbedarf des zweiten Holms weiter verkleinert und damit der für einen Fluggastsitz zu Verfügung stehende "Living Space" weiter vergrößert werden.

In einer bevorzugten Ausgestaltung der Erfindung ist der Durchmesser des ersten Holms 20, 30, 40, 50, 60, 70, 80, 90, 100, 110, 120, 130, 140 oder 150% größer als der zweite Holm. Der hintere Holm weist z.B. einen absoluten Durchmesser von 25-40 mm auf, insbesondere einen Durchmesser von ca. 35 mm.

Der vordere Holm besitzt z.B. einen Durchmesser von 40-60 mm, insbesondere von 45-55 mm, z.B. ungefähr 50 mm.

Darüber hinaus ist es von Vorteil, wenn sich die Materialien des ersten Holms und des zweiten Holms unterscheiden. Damit kann vorteilhafterweise zudem Einfluss auf deren Dimensionierung, insbesondere den Durchmesser der Holme, genommen worden.

Der vorne liegende vordere Holm ist vorzugsweise aus Aluminium oder Titan. Der hintere Holm ist beispielsweise aus Stahl. Damit kann ein vergleichsweise kleiner Durchmesser bei hoher Festigkeit des hinteren Holms gewählt werden. Denkbar ist auch der Einsatz von Titan am hinteren Holm, sodass bei hoher Festigkeit eine kleine Dimensionierung des Holms möglich ist, mit einem vergleichsweise kleinen Querschnitt bzw. einem vergleichsweise kleinen Durchmesser.

In einer bevorzugten Ausgestaltung der Erfindung ist zumindest ein Holm ein länglicher Hohlkörper. Damit lässt sich bei hoher Steifigkeit außerdem ein vergleichsweise kleines Gewicht eines Holms realisieren, vor allem wenn der vordere und hintere Holm als Hohlkörper ausgebildet ist. Vorzugsweise handelt es sich bei dem Hohlkörper um ein Rohr. Der vordere und der hintere Holm können als Rohr ausgebildet sein, insbesondere als Rundrohr.

Von Vorteil erweist sich auch, dass der Abstand des zweiten hinteren Holms in senkrechter Richtung von einer Ebene, die durch Befestigungspunkte des Gestells am Boden an einer Fluggastkabine gebildet ist (Montageebene) bzw. in senkrechter Richtung von einem Kabinenboden größer.als 280 mm beträgt. Ein ebener Kabinenboden entspricht einer Ebene, die durch Befestigungspunkte des Gestells am Boden an einer Fluggastkabine gebildet ist oder ist zu dieser parallel.

Um für noch mehr Beinfreiheit eines Fluggastes zu sorgen, der hinter einem erfindungsgemäßen Fluggastsitz sitzt, ist der Abstand des zweiten hinteren Holmes in senkrechter Richtung vorteilhafter Weise größer als 290 mm, 300 mm, 310 mm, 320 mm, 330 mm oder 340 mm.

Vorzugsweise ist der Abstand des vorderen ersten Holms in senkrechter Richtung von einem Kabinenboden beispielsweise kleiner als 280 mm, 270 mm, 260 mm, 250 mm oder 240 mm.

Die Abstände beziehen sich bevorzugt auf eine Längsachse, beispielsweise zentrische Längsachse, insbesondere Symmetrieachse, z.B. Rotationsachse der Holme.

Ein Abstand der Holme zueinander parallel zum Kabinenboden bzw. zu einer Montageebene beträgt vorzugsweise weniger als 260 mm, 250 mm, 230 mm oder 220 mm.

Vorteilhafterweise ist der Abstand-ungefähr 247 mm.

Erfindungsgemäß ist eine Sitzreihe mit mindestens zwei Fluggastsitzen vorhanden.

Bei dieser Ausgestaltung ist es bevorzugt, wenn mindestens zwei Fluggastsitze jeweils einen gemeinsamen durchlaufenden ersten und vorzugsweise zweiten durchlaufenden Holm aufweisen. Vorteilhafterweise sind vier Sitzteiler vorgesehen, zwei für jeden Sitz an den durchlaufenden ersten und zweiten Holmen.

Grundsätzlich ist es bevorzugt, wenn die Sitzteiler von etwaigen Führungsschienen für einen etwaigen bewegbar gelagerten Sitzboden oder von einer Umhausung im Bereich zwischen den Holmen verschieden sind. Ein Sitzteiler hat vorzugsweise an den Holmen Befestigungsstellen, z.B. in Form von Schraubverbindungen.

Beispielsweise ist am Sitzteiler eine Umhausung für die Rückenlehne montiert. Erfindungsgemäß ist die Führungsschiene für den bewegbar gelagerten Sitzboden ein separates Bauteil in Bezug zum Sitzteiler, wobei die Führungsschiene am ersten und am zweiten Holm montiert ist. Beispielsweise ist der Sitzteiler an den Holmen montiert.

Die Sitzteiler sind bevorzugt über eine Schraubennabenverbindung an den Holmen angebracht.

Der Sitzteiler ist vorzugsweise ein Bauteil mit einer Vielzahl von Aussparungen in seiner Oberfläche zur Gewichtsreduzierung und dabei Ausbildung einer fachwerkartigen Streben- bzw. Stegstruktur.

Die Sitzteiler unterscheiden sich vorteilhafterweise von Fußteilen, die unterhalb der Holme das Gestell ausbilden und ggf. verbinden, d.h. z.B. eine Verbindung von vorderem und hinterem Holm unterhalb der Holme bereitstellen.

Der Fluggastsitz umfasst in einer vorteilhaften Ausgestaltung eine klappbare Beinauflage im Anschluss an einen Sitzboden.

### Beschreibung eines Ausführungsbeispiels

Nachfolgend wird ein Ausführungsbeispiel der Erfindung anhand von schematischen Zeichnungen näher erläutert und weitere Vorteile genannt.

Es zeigen:
- Figur 1: in einer perspektivischen Ansicht eine Sitzreihe mit zwei Fluggastsitzen mit verstellbarer Beinauflage, mit teilweise dargestellter bzw. abgeschnittener Umhausung der Rückenlehne,
- Figur 2: in einer perspektivischen Ansicht von schräg hinten das Sitzpaar gemäß Figur 1 mit einem Teil einer Umhausung für eine Rückenlehne, ohne Rückenlehne, Sitzboden und Beinauflage.
- Figur 3: einen Sitzteiler für einen Fluggastsitz nach den Figuren 1 und 2 mit Stützbeinen und Holmen in einer schematischen Detailansicht von der Seite.

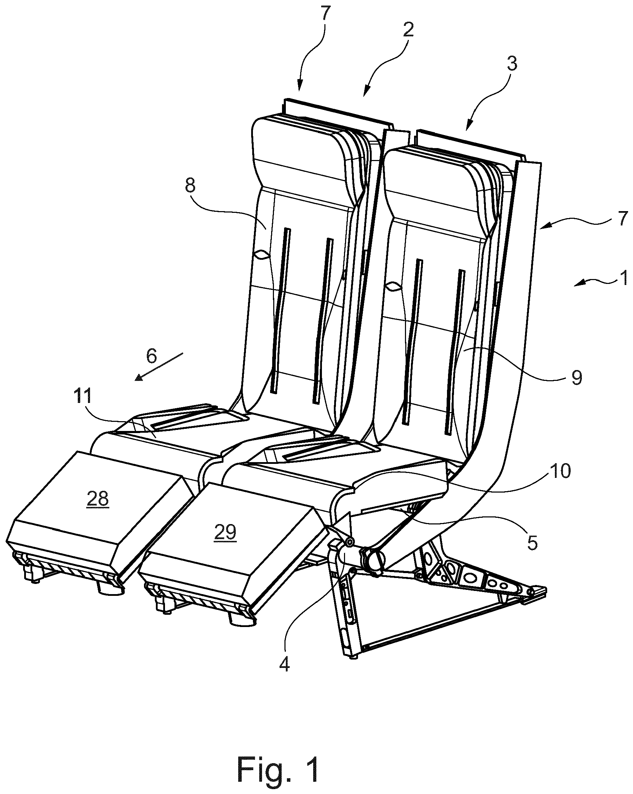

Figur 1 zeigt eine Sitzreihe 1 mit zwei Fluggastsitzen 2, 3.

Die Fluggastsitze 2, 3 umfassen z.B. zwei Tragrohre 4, 5, das vordere Tragrohr 4 sowie das hintere Tragrohr 5 bezogen auf eine Sitzrichtung 6.

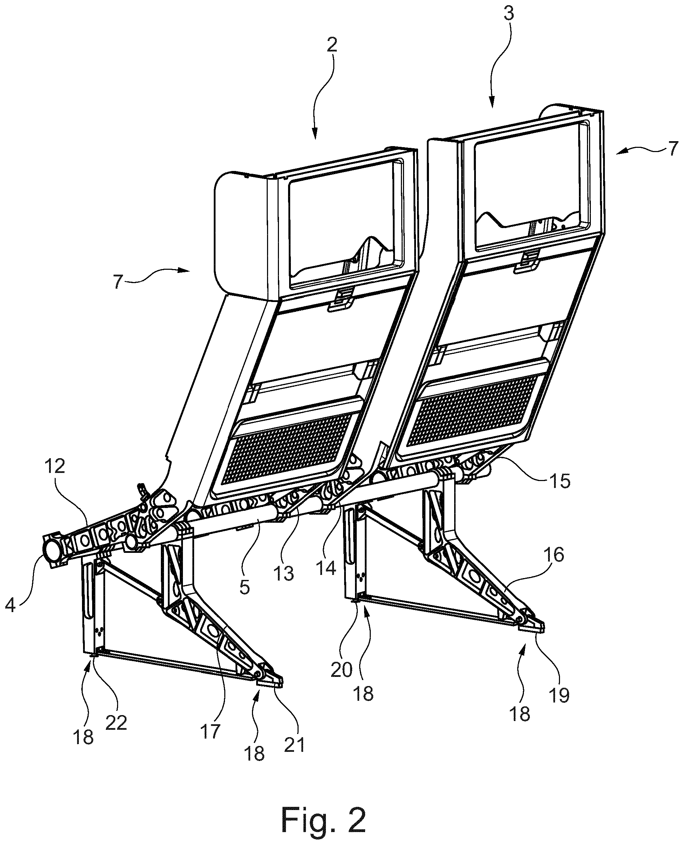

Die Sitze 2, 3 besitzen eine Umhausung 7, die in den Figuren 1 und 2 jeweils nur teilweise bzw. abgeschnitten schematisch dargestellt ist. In einer Schalenform der jeweiligen Umhausung 7 ist eine Rückenlehne 8, 9 angeordnet. Die Rückenlehne 8, 9 ist vorzugsweise zur Einstellung von unterschiedlichen Kippstellungen beweglich in der Umhausung geführt, beispielsweise zusammen mit einem verschiebbar gelagerten Sitzboden 10, 11. Im Anschluss an den Sitzboden 10, 11 nach unten ist vorteilhafterweise eine klappbare Beinauflage 12, 13 für den jeweiligen Fluggastsitz 2, 3 vorgesehen.

Die Tragrohre 4, 5 sind durchgehend für beide Fluggastsitze 3, 4 und werden von den Fluggastsitzen 3, 4 als gemeinsames Montageelement genutzt. Nur einem Fluggastsitz zugeordnete Tragrohre sind auch denkbar.

An den Tragrohren 4, 5 sind Sitzteiler 12, 13, 14, 15 über beispielsweise eine Schraubenverbindung, z.B. eine Scheibennabenverbindung montiert. Ebenfalls an den Tragrohren 4, 5 sind Stützbeine 16, 17 z.B. angeschraubt.

Der jeweilige untere Endbereich 18 der Stützbeine 16, 17 umfasst Montagestellen 19, 20, 21, 22 zur Montage an einem Kabinenboden. Im Ausführungsbeispiel wird von einem ebenen Kabinenboden ausgegangen, zu welchem die Tragrohre 4, 5 parallel verlaufen und somit die Montagestellen 19, 20, 21 und 22 eine Montageebene 23 definieren, zu welcher die Tragrohre 4, 5 ebenfalls parallel verlaufen.

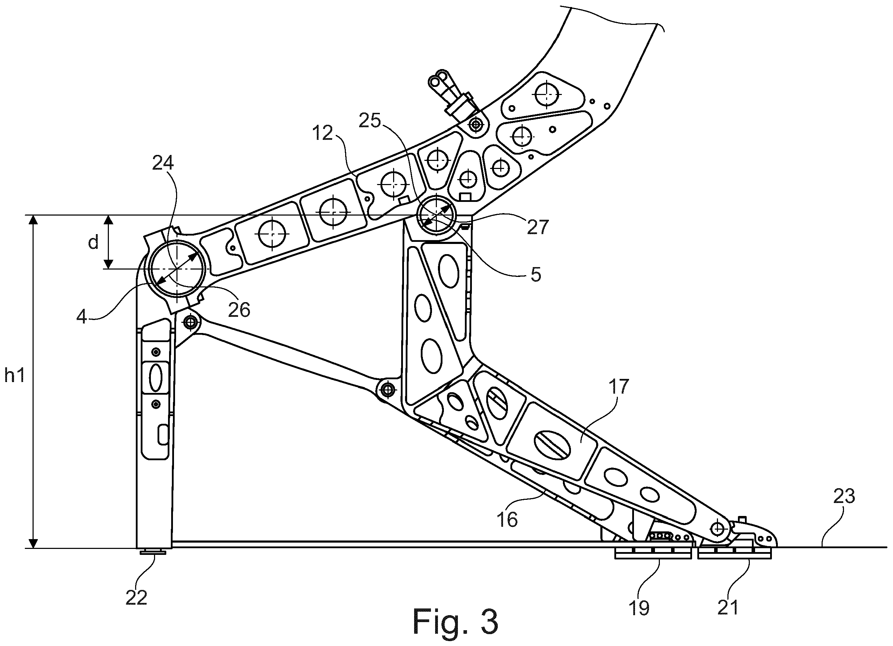

Die Position der Tragrohre 4, 5 an den Stützbeinen 16, 17 und damit in Bezug zu der Montageebene 23, die normalerweise dem Kabinenboden entspricht, ist in Figur 3 ersichtlich. Dargestellt ist außerdem der Sitzteiler 12 in dieser Ansicht.

Die Tragrohre 4, 5 sind wie im Ausführungsbeispiel dargestellt vorzugsweise Rundrohre und weisen eine Symmetrieachse bzw. Rotationsachse 24, 25 auf. Eine Höhe h1 des hinteren Tragrohrs 5 senkrecht zur Montageebene 23, bzw. dem Kabinenboden ist in Figur 3 ersichtlich. Die Höhendifferenz zwischen dem vorderen Tragrohr 4 und dem hinteren Tragrohr 5 in ebenfalls senkrechter Richtung zur Montageebene 23 weist den Wert d auf. Der Wert d beträgt im Ausführungsbeispiel 50 mm, kann jedoch wie in der allgemeinen Beschreibung ausgeführt die entsprechenden Werte beginnend von 20 mm zu einer größeren Differenz hin besitzen.

Im Ausführungsbeispiel beträgt die Höhe h1 307 mm, kann aber ebenfalls in den in der allgemeinen Beschreibung aufgeführten Wertebereichen beginnend mit 280 mm liegen.

Durch die erfindungsgemäße Positionierung, insbesondere des hinteren Tragrohrs 5 erstreckt sich in diesem Bereich der Fluggastsitz weniger weit hin zu einem Kabinenboden, sodass dort für einen Fluggast mehr Bewegungsfreiheit und damit "Living Space" zur Verfügung steht.

Zusätzlich wird dieser Effekt noch dadurch verbessert, dass ein Durchmesser 27 des hinteren Tragrohrs 5 deutlich kleiner ist als ein Durchmesser 26 des vorderen Tragrohres 4. Im Ausführungsbeispiel beträgt der Durchmesser 27 ca. 35 mm und der Durchmesser 26 ca. 50 mm. Hier sind ebenfalls die in der allgemeinen Beschreibung aufgeführten weiteren Werte denkbar.'

### Bezugszeichenliste

- 1: Sitzreihe
- 2: Fluggastsitz
- 3: Fluggastsitz
- 4: Tragrohr
- 5: Tragrohr
- 6: Sitzrichtung
- 7: Umhausung
- 8: Rückenlehne
- 9: Rückenlehne
- 10: Sitzboden
- 11: Sitzboden
- 12: Sitzteiler
- 13: Sitzteiler
- 14: Sitzteiler
- 15: Sitzteiler
- 16: Stützbeine
- 17: Stützbeine
- 18: unterer Endbereich
- 19: Montagestelle
- 20: Montagestelle
- 21: Montagestelle
- 22: Montagestelle
- 23: Montageebene
- 24: Symmetrieachse
- 25: Symmetrieachse
- 26: Durchmesser
- 27: Durchmesser
- 28: Beinauflage
- 29: Beinauflage

## Patentansprüche

1. Sitzreihe (1) mit mindestens zwei Fluggastsitzen, wobei jeder Fluggastsitz ein Gestell aufweist, welches zur Befestigung an einem Boden einer Fluggastkabine vorgesehen ist, wobei das Gestell einen Sitzteiler (12, 13, 14, 15) umfasst, wobei die Sitzreihe (1) einen ersten quer zur Sitzrichtung (6) verlaufenden Holm (4) und einen zweiten quer zur Sitzrichtung (6) verlaufenden Holm (5) umfasst, wobei die Sitzteiler (12, 13, 14, 15) der Gestelle der mindestens zwei Fluggastsitze durch die Holme (4, 5) gehalten sind und hinter dem ersten vorne liegenden vorderen Holm (4) bezogen auf die Sitzrichtung (6) des Fluggastsitzes (2, 3) der hintere dahinterliegende zweite Holm (5) angeordnet ist, wobei jeder Fluggastsitz einen Sitzboden und eine Rückenlehne aufweist, wobei der Sitzboden über Führungsmittel an einer Führungsschiene verschiebbar gelagert ist, wobei die Rückenlehne bewegbar am Gestell gelagert ist, sodass die Rückenlehne zusammen mit dem Sitzboden eine Schwenk-Verschiebebewegung ausführen kann,
wobei senkrecht zu einer Ebene (23), die durch Befestigungspunkte (19, 20, 21, 22) des Gestells am Boden einer Fluggastkabine gebildet ist, ein Höhenunterschied zwischen dem ersten und dem zweiten Holm (4, 5) derart vorhanden ist, dass der hintere, zweite Holm (5) mindestens um ein Differenzmaß d von 20 mm über dem vorderen, ersten Holm (4) liegt, wobei sich das Differenzmaß d auf eine Höhenunterschied einer zentrischen Längsachsen des ersten Holms zu einer zentrischen Längsachse des zweiten Holms bezieht, **dadurch gekennzeichnet, dass** die Führungsschiene als ein vom Sitzteiler separates Bauteil vorhanden ist, wobei die Führungsschiene am ersten und am zweiten Holm (4, 5) montiert ist.

2. Sitzreihe (1) nach dem vorhergehenden Anspruch 1, **dadurch gekennzeichnet, dass** das Gestell eine Umhausung der Rückenlehne aufweist.

3. Sitzreihe (1) nach einem der vorhergehenden Ansprüche, **dadurch gekennzeichnet, dass** jeder Fluggastsitz (2, 3) zwei Sitzteiler (12, 13; 14, 15) umfasst.

4. Sitzreihe (1) nach einem der vorhergehenden Ansprüche, **dadurch gekennzeichnet, dass** der erste und zweite Holm unterschiedliche Querschnitte aufweisen.

5. Sitzreihe (1) nach einem der vorhergehenden Ansprüche, **dadurch gekennzeichnet, dass** der erste Holm einen größeren Durchmesser (26) als der zweite Holm aufweist.

6. Sitzreihe (1) einem der vorhergehenden Ansprüche, dass der Durchmesser (26) des ersten Holms (4), 20% größer ist als der Durchmesser (27) des zweiten Holms (5).

7. Sitzreihe (1) nach einem der vorhergehenden Ansprüche, **dadurch gekennzeichnet, dass** sich die Materialien des ersten Holms (4) und des zweiten Holms (5) unterscheiden.

8. Sitzreihe (1) nach einem der vorhergehenden Ansprüche, **dadurch gekennzeichnet, dass** der erste Holm aus Aluminium und/oder Titan und der zweite Holm aus Stahl und/oder Titan besteht.

9. Sitzreihe (1) nach einem der vorhergehenden Ansprüche, **dadurch gekennzeichnet, dass** zumindest ein Holm (4, 5) ein länglicher Hohlkörper ist.

10. Sitzreihe (1) nach einem der vorhergehenden Ansprüche, **dadurch gekennzeichnet, dass** zumindest ein Holm ein Rundrohr (4, 5) ist.

11. Sitzreihe (1) nach einem der vorhergehenden Ansprüche, **dadurch gekennzeichnet, dass** der Abstand h1 des zweiten hinteren Holms (5) in senkrechter Richtung von einer Ebene, die durch Befestigungspunkte (19, 20, 21, 22) des Gestells am Boden an einer Fluggastkabine gebildet ist, größer als 280 mm beträgt.

12. Sitzreihe nach einem der vorhergehenden Ansprüche, **dadurch gekennzeichnet, dass** die mindestens zwei Fluggastsitze (2, 3) jeweils einen gemeinsam durchlaufenden ersten und zweiten Holm (4, 5) aufweisen.

## Claims

1. Row of seats (1) comprising at least two air passenger seats, wherein each air passenger seat has a frame which is provided for fastening to a floor of an air passenger cabin, wherein the frame comprises a seat divider (12, 13, 14, 15), wherein the row of seats (1) comprises a first strut (4) running transversely with respect to the seating direction (6) and a second strut (5) running transversely with respect to the seating direction (6), wherein the seat dividers (12, 13, 14, 15) of the frames of the at least two air passenger seats are held by the struts (4, 5) and, behind the first front strut (4) which is located in front with respect to the seating direction (6) of the air passenger seat (2, 3), there is the rear second strut (5) located behind the first strut, wherein each air passenger seat has a seat base and a back rest, wherein the seat base is mounted displaceably on a guide rail via guide means, wherein the back rest is mounted movably on the frame such that the back rest together with the seat base can execute a pivoting and displacement movement, wherein, perpendicular to a plane (23) which is formed by fastening points (19, 20, 21, 22) of the frame to the floor of an air passenger cabin, there is a height difference between the first and the second strut (4, 5) in such a manner that the rear second strut (5) is located above the front first strut (4) at least by a differential dimension d of 20 mm, wherein the differential dimension d refers to a height difference of a central longitudinal axis of the first strut to a central longitudinal axis of the second strut, **characterized in that** the guide rail is present as a separate component from the seat divider, wherein the guide rail is mounted on the first and on the second strut (4, 5).

2. Row of seats (1) according to the preceding Claim 1, **characterized in that** the frame has an enclosure of the back rest.

3. Row of seats (1) according to either of the preceding claims, **characterized in that** each air passenger seat (2, 3) comprises two seat dividers (12, 13; 14, 15).

4. Row of seats (1) according to one of the preceding claims, **characterized in that** the first and second strut have different cross sections.

5. Row of seats (1) according to one of the preceding claims, **characterized in that** the first strut has a larger diameter (26) than the second strut.

6. Row of seats (1) according to one of the preceding claims, in that the diameter (26) of the first strut (4) is 20% larger than the diameter (27) of the second strut (5) .

7. Row of seats (1) according to one of the preceding claims, **characterized in that** the materials of the first strut (4) and of the second strut (5) differ.

8. Row of seats (1) according to one of the preceding claims, **characterized in that** the first strut is composed of aluminium and/or titanium and the second strut of steel and/or titanium.

9. Row of seats (1) according to one of the preceding claims, **characterized in that** at least one strut (4, 5) is an elongate hollow body.

10. Row of seats (1) according to one of the preceding claims, **characterized in that** at least one strut is a round tube (4, 5).

11. Row of seats (1) according to one of the preceding claims, **characterized in that** the distance h1 of the second rear strut (5) in the perpendicular direction from a plane which is formed by fastening points (19, 20, 21, 22) of the frame on the floor of an air passenger cabin is greater than 280 mm.

12. Row of seats according to one of the preceding claims, **characterized in that** the at least two air passenger seats (2, 3) each have a first and second strut (4, 5) jointly running through them.

## Revendications

1. Rangée de sièges (1) comprenant au moins deux sièges de passager, chaque siège de passager comportant un cadre qui est destiné à être fixé à un plancher d'une cabine de passagers, le cadre comprenant un séparateur de sièges (12, 13, 14, 15), la rangée de sièges (1) comprenant une première barre (4) qui s'étend transversalement à la direction de siège (6) et une deuxième barre (5) qui s'étend transversalement à la direction de siège (6), les séparateurs de sièges (12, 13, 14, 15) des cadres des au moins deux sièges de passager étant maintenus par les barres (4, 5) et la deuxième barre arrière (5) étant disposée en.arrière de la première barre avant (4) par rapport à la direction de siège (6) du siège de passager (2, 3), chaque siège de passager comportant une assise et un dossier, l'assise étant montée de façon mobile sur un rail de guidage par l'intermédiaire de moyens de guidage, le dossier étant monté de façon mobile sur le cadre de sorte que le dossier puisse effectuer un mouvement de pivotement conjointement avec l'assise,
une différence de hauteur étant ménagée entre la première et la deuxième barre (4, 5) perpendiculairement à un plan (23) qui est formé par des points de fixation (19, 20, 21, 22) du cadre sur le plancher d'une cabine de passagers de manière que la deuxième barre arrière (5) est située au-dessus de la première barre avant (4) avec une différence dimensionnelle d d'au moins 20 mm, la différence dimensionnelle d se rapportant à une différence de hauteur entre un axe longitudinal central de la première barre et un axe longitudinal central de la deuxième barre, **caractérisée en ce que** le rail de guidage est présent en tant que composant séparé du séparateur de sièges, le rail de guidage étant monté sur la première et la deuxième barre (4, 5).

2. Rangée de sièges (1) selon la revendication 1 précédente, **caractérisée en ce que** le cadre comporte un logement destiné au dossier.

3. Rangée de sièges (1) selon l'une des revendications précédentes, **caractérisée en ce que** chaque siège de passager (2, 3) comporte deux séparateurs de siège (12, 13 ; 14, 15).

4. Rangée de sièges (1) selon l'une des revendications précédentes, **caractérisée en ce que** la première et la deuxième barre ont des sections transversales différentes.

5. Rangée de sièges (1) selon l'une des revendications précédentes, **caractérisée en ce que** la première barre a un diamètre (26) supérieur à celui de la deuxième barre.

6. Rangée de sièges (1) selon l'une des revendications précédentes, en ce que le diamètre (26) de la première barre (4) est supérieur de 20 % au diamètre (27) de la deuxième barre (5).

7. Rangée de sièges (1) selon l'une des revendications précédentes, **caractérisée en ce que** les matériaux de la première barre (4) et de la deuxième barre (5) sont différents.

8. Rangée de sièges (1) selon l'une des revendications précédentes, **caractérisée en ce que** la première barre est en aluminium et/ou en titane et la deuxième barre est en acier et/ou en titane.

9. Rangée de sièges (1) selon l'une des revendications précédentes, **caractérisée en ce qu'**au moins une barre (4, 5) est un corps creux allongé.

10. Rangée de sièges (1) selon l'une des revendications précédentes, **caractérisée en ce qu'**au moins une barre est un tube rond (4, 5).

11. Rangée de sièges (1) selon l'une des revendications précédentes, **caractérisée en ce que** la distance h1 de la deuxième barre arrière (5) dans la direction verticale à partir d'un plan qui est formé par des points de fixation (19, 20, 21, 22) du cadre au niveau du plancher d'une cabine de passagers est supérieure à 280 mm.

12. Rangée de sièges selon l'une des revendications précédentes, **caractérisée en ce que** les au moins deux sièges de passager (2, 3) comportent chacun une première et une deuxième barre (4, 5) s'étendant conjointement de manière continue.
